# EUROPEAN PATENT APPLICATION

(11) **EP 1 175 094 A1**
(43) Date of publication of application: **23.01.2002**
(21) Application number: 00964698.5
(22) Date of filing: 05.10.2000
(51) Int. Cl.: H04N 5/7617, H04N 7/088, H04N 5/38, H04N 5/44

(54) **TRANSMITTER AND RECEIVER**

(30) Priority: 19.10.1999 JP 29731099
(71) Applicant: MATSUSHITA ELECTRIC INDUSTRIAL CO., LTD., Kadoma-shi, Osaka 571-0050 (JP)
(72) Inventor: ARAI, Yuko, Ohta-ku, Tokyo 144-0034 (JP); MACHIDA, Kazuhiro, Inzai-shi, Chiba 270-1356 (JP); NABESHIMA, Shinji, Adachi-ku, Tokyo 120-0011 (JP)
(74) Representative: Grünecker, Kinkeldey, Stockmair & Schwanhäusser Anwaltssozietät
(86) International application number: JP0006962
(87) International publication number: WO0130074

(57) **Abstract**

A transmitting apparatus and a receiving apparatus capable of automatically recording and storing a plurality of broadcast programs and a part of a broadcast program based on the next broadcast schedule are provided.

A transmitting apparatus (10) comprises program association data storage means (11) for storing program association data to be broadcasted in association with a program, a program scheduler (13) for managing a sending schedule of the program and the program association data, program sending means (18) for sending the program as instructed by the program scheduler, and program association data sending means (14) for sending the program association data as instructed by the program scheduler, wherein the program association data contains a next broadcast schedule of the broadcast program in association or program association data. A receiving apparatus (30) comprises program association data storage means (33) for storing program association data containing a next broadcast schedule of a program or program association data, to be broadcasted in association with the program, and programming means (31) for programming the apparatus to record and store a program or program association data, wherein the programming means programs the apparatus to record and store in accordance with the next broadcast schedule contained in the program association data. Once the apparatus is programmed to record and store one program, the apparatus can be programmed automatically to record and store the next broadcast of the program.

## Description

### <Technical Field>

This invention relates to a sending apparatus for broadcasting a program and data added to the program by digital broadcasting using a communication satellite, a broadcast satellite, or a ground wave, for example, and a receiving apparatus for receiving and storing the program and the data added to the program and in particular to an apparatus capable of automatically being programmed to record a program and storing the program broadcasted next time.

### <Background of the Invention>

In recent years, content business for broadcasting programs and data as content has been starting.

Hitherto, an apparatus described in JP-B-8-4327 has been known as a receiving apparatus being programmed to record a program for retaining the video and sound of the program.

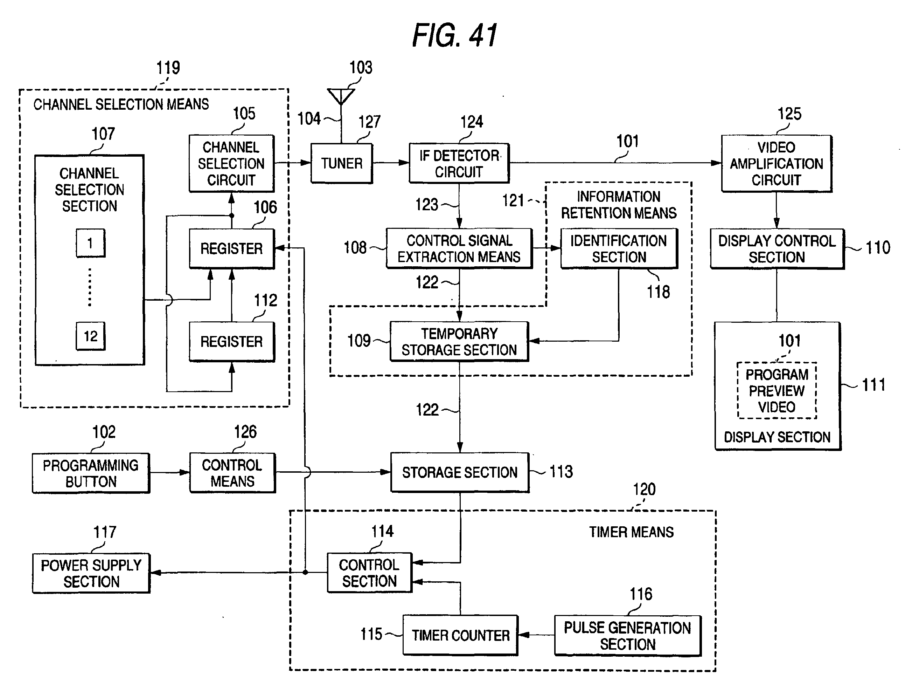

As shown in FIG. 41, the apparatus comprises a reception antenna 103 for receiving a television signal 104 containing a control signal 123 in a vertical blanking period, control signal extraction means 108 for extracting the control information 123 from the television signal, a temporary storage section 109 for temporarily storing time information 122 of broadcast schedule date and time contained in the control signal, a display section 111 for displaying program preview video 101, a programming button 102 for the viewer seeing a program preview to press, control means 126 for outputting a control pulse when the programming button 102 is pressed, a storage section 113 for storing the time information 122 retained in the temporary storage section 109 according to the control pulse, a register 106 for setting a channel number, a channel selection circuit 105 for selecting the channel set in the register 106, a control section 114 of timer means 120 for starting a power supply section 117 at the preselected time, and a tuner 127 for selecting a channel.

The apparatus receives the television signal 104 containing the control signal 123 in a vertical blanking period through the reception antenna 103. The control information 123 contains the time information 122 and clear control information for clearing the information in the temporary storage section 109. The time information 122 contains the broadcast start date and time and broadcast time data of the program announced by the program preview video 101.

The program preview video 101 is displayed on the display section 111. The control information 123 is extracted and distinguished by the control signal extraction means 108 and the time information 122 is set in the temporary storage section 109. When the program preview video 101 terminates, the broadcast schedule date and time read from the temporary storage section 109 and a message of "press programming button" are displayed on the display section 111. If the viewer seeing the program preview video 101 presses the programming button 102, the time information 122 in the temporary storage section 109 is set in the storage section 113 according to the control pulse output from the control means 123 accordingly. Then, the apparatus is programmed to record the program announced by the program preview video 101. The message "press programming button" displayed on the display section 111 is updated to a message of "programmed."

The channel selection circuit 105 has channel switch means for making it possible to receive a television signal of the television station responsive to the channel number set in the register 106. When the date and time set in the control section 113 are reached, the control section 114 sends a control pulse 117 to the power supply section 117 for turning on the power.

However, the apparatus in the related art can be programmed to record an announced program, but cannot deal with such service of recording and storing a plurality of programs or a part of a program.

As such service, news service wherein a broadcasting station broadcasts news and a receiving apparatus records and stores the news, for example, is possible. When the viewer makes a request, the receiving apparatus displays the programs recorded and stored as the most recent news as a news list and plays back the news selected by the viewer out of the list. If the news is always broadcasted at the same time of day, the receiving apparatus can also be programmed to record and store the program as a function built in the receiving apparatus; in this case, however, when the program schedule is changed, the receiving apparatus cannot deal with the change.

When the apparatus in the related art is programmed to record one program, whether or not the apparatus is also programmed to record another program cannot be checked. Under the present circumstances, a single tuner is still mainstream and thus with most receiving apparatus widespread at present, only one program flowing on one transmission line (TS (Transport Stream) in MPEG2TS) can be viewed and recorded and stored. Therefore, if the apparatus is programmed to record more than one program, an accident in which the program is not recorded or stored occurs although the viewer intends to program the apparatus to record the programs.

The invention is intended for solving the problems in the related arts and it is an object of the invention to provide a sending apparatus for broadcasting the next broadcast schedule of a program as program association data and a receiving apparatus capable of automatically recording and storing a plurality of broadcast programs and a part of a broadcast program based on the next broadcast schedule.

### <Disclosure of the Invention>

In the invention, a transmitting apparatus comprises program association data storage means for storing program association data to be broadcasted in association with a program, a program scheduler for managing a sending schedule of the program and the program association data, program sending means for sending the program as instructed by the program scheduler, and program association data sending means for sending the program association data as instructed by the program scheduler, wherein the program association data contains a next broadcast schedule of the program for broadcasting data in association or program association data.

A receiving apparatus comprises program association data storage means for storing program association data containing a next broadcast schedule of a program or program association data, to be broadcasted in association with the program, and programming means for programming the apparatus to record and store a program or program association data, wherein the programming means programs the apparatus to record and store in accordance with the next broadcast schedule contained in the program association data.

Therefore, once the apparatus is programmed to record and store one program, the apparatus can be programmed automatically to record and store the next broadcast of the program.

### <Brief Description of the Drawings>

FIG. 1 shows a transmitting apparatus and a receiving apparatus in a first embodiment;
FIG. 2 is a next broadcast schedule table in the first embodiment;
FIG. 3 shows organization information in the first embodiment;
FIG. 4 is a time chart to show the sending timings of programs and program association data in the first embodiment;
FIG. 5 is another time chart to show the sending timings of programs and program association data in the first embodiment;
FIG. 6 is a video and sound management table in the first embodiment;
FIG. 7 is a program association data management table in the first embodiment;
FIG. 8 is an EIT (program information table) in the first embodiment;
FIG. 9 shows an EPG screen in the first embodiment;
FIG. 10 is a PMT in the first embodiment;
FIG. 11 shows a transmitting apparatus and a receiving apparatus in a second embodiment;
FIG. 12 shows organization information in the second embodiment;
FIG. 13 is a next broadcast schedule table in the second embodiment;
FIG. 14 is a programming-to-store management table in the second embodiment;
FIG. 15 is a second programming-to-store management table in the second embodiment;
FIG. 16 is a programming-to-store management table in a third embodiment;
FIG. 17 is another programming-to-store management table in the third embodiment;
FIG. 18 is a record completion management table in the third embodiment;
FIG. 19 is another record completion management table in the third embodiment;
FIG. 20 is a programming-to-store management table in the third embodiment;
FIG. 21 is a programming-to-store management table in the first embodiment;
FIG. 22 is another programming-to-store management table in the first embodiment;
FIG. 23 is a PMT in the first embodiment;
FIG. 24 is a programming-to-store management table in the first embodiment;
FIG. 25 is a storage management table in the first embodiment;
FIG. 26 shows a storage service list example in the first embodiment;
FIG. 27 shows a content list example in the first embodiment;
FIG. 28 shows a display screen in the first embodiment;
FIG. 29 shows EIT organization information in a fourth embodiment;
FIG. 30 is a content management table in the fourth embodiment;
FIG. 31 shows content organization information in the fourth embodiment;
FIG. 32 is an available PID management table in the fourth embodiment;
FIG. 33 is an EIT (program information table) in the fourth embodiment;
FIG. 34 is a next broadcast schedule table in the fourth embodiment;
FIG. 35 is another next broadcast schedule table in the fourth embodiment;
FIG. 36 is a PID assignment management table in the fourth embodiment;
FIG. 37 is a PMT in the fourth embodiment;
FIG. 38 shows a circulation pattern in the first embodiment of the invention;
FIG. 39 shows a circulation pattern in the fourth embodiment of the invention;
FIG. 40 shows a transmitting apparatus and a receiving apparatus in the third embodiment; and
FIG. 41 is a block diagram to show a receiver in a related art.

In the figures, numeral 10 denotes a sending apparatus, numeral 11 denotes program association data storage means, numeral 12 denotes program association data creation means, numeral 13 denotes a program scheduler, numeral 14 denotes program association data sending means, numeral 15 denotes program information creation means, numeral 16 denotes program information sending means, numeral 17 denotes program storage means, numeral 18 denotes program sending means, numeral 19 denotes transmission means, numeral 30 denotes a receiving apparatus, numeral 31 denotes programming means, numeral 32 denotes reception means, numeral 33 denotes program association data storage means, numeral 34 denotes program information storage means, numeral 35 denotes program storage means, numeral 36 denotes storage management means, numeral 37 denotes stored program displaymeans, andnumeral 38 denotes program information display means.

### <Best Mode for Carrying out the Invention>

### (First embodiment)

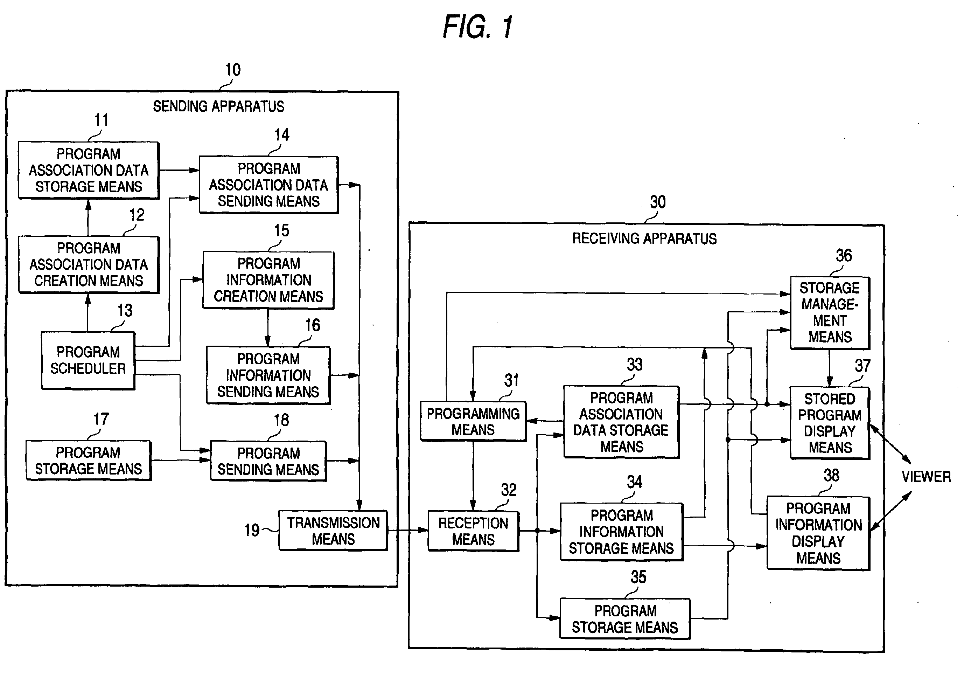

FIG. 1 shows a sending apparatus and a receiving apparatus of a first embodiment.

A sending apparatus 10 comprises program storage means 17 for managing and storing video and sound data of a program, a program scheduler 13 for managing organization information of a program, program association data creation means 12 for creating program association data to be broadcasted in association with a program, program association data storage means 11 for managing program association data according to a program association data management table, program information creation means 15 for creating SI (EIT, etc.,) and PSI (PMT, etc,) from the organization information managed by the program scheduler 13, program association data sending means 14 for sending program association data as instructed from the program scheduler 13, program information sending means 16 for sending the program information of EIT, PMT, etc., program sending means 18 for sending a program as instructed from the program scheduler 13, and transmission means 19 for transmitting the program association data, the program information, and a program to a receiving apparatus 30.

On the other hand, the receiving apparatus 30 comprises reception means 32 for receiving the program association data, the program information, and the program sent from the sending apparatus 10, programming means 31 for programming the apparatus to store the program and the program association data, program information storage means 34 for storing the received program information, program storage means 35 for storing the received program that the apparatus is programmed to store, program association data storage means 33 for storing the received program association data that the apparatus is programmed to store, program information display means 38 for displaying the program information, storage management means 36 for managing the stored program and program association data, and stored program display means 37 for displaying the stored program.

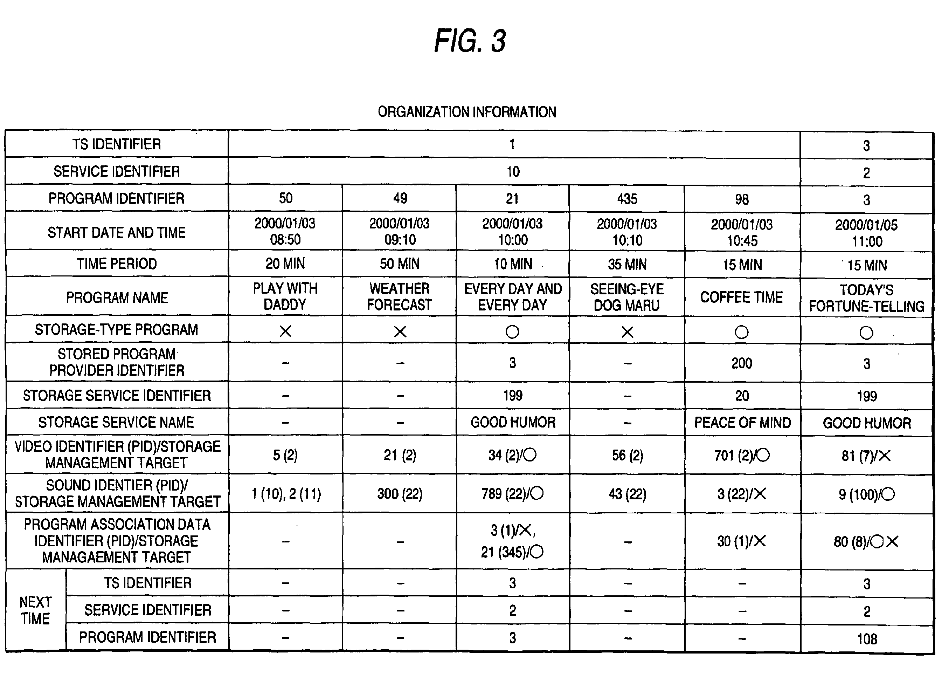

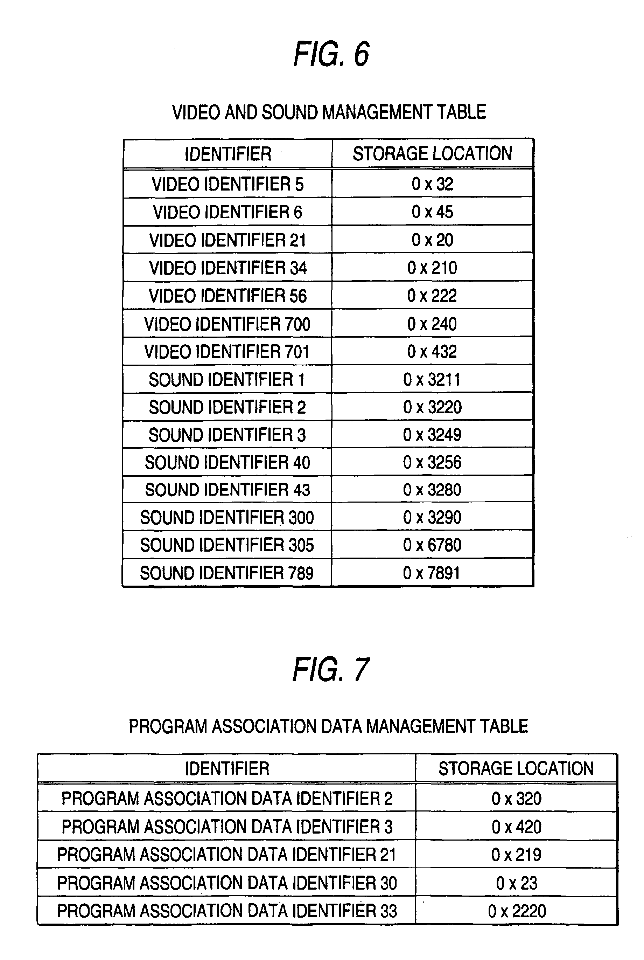

In the sending apparatus, the program storage means 17 manages and stores the video and sound data of each program according to a video and sound management table (FIG. 6). The program scheduler 13 manages the organization information of each program (FIG. 3).

The organization information (FIG. 3) describes TS identifiers, service identifiers, and the start date and time and the time period of each program, the program name, a flag indicating whether or not the program is a storage-type program, the identifier indicating the provider of the program, the identifier of storage service, and the storage service name if the program is a storage-type program, the identifier of video broadcasted as the program, PID sending it, and a flag indicating whether or not the video is a storage management target, the sound identifier, PID sending it, and a flag indicating whether or not the sound is a storage management target, the program association data identifier of the program association data to be broadcasted at the same time as the program, PID sending it, and a flag indicating whether or not the program association data is a storage management target, and the next broadcast schedule of each program for each program identifier. The video, the sound, and the program association data each with the flag indicating whether or not it is a storage management target, set to "o" are to be managed by the storage management means 36 in the receiving apparatus 30.

The program association data creation means 12 creates program association data of data broadcasted in association with a program and sends the program association data to the program association data storage means 11. The program association data can include not only simple data, but also video and sound; here, the next broadcast schedule of the program is sent to the receiving apparatus as the program association data.

Thus, the program association data creation means 12 searches the organization information in FIG. 3 for the program whose next broadcast schedule is described, and creates a next broadcast schedule table.

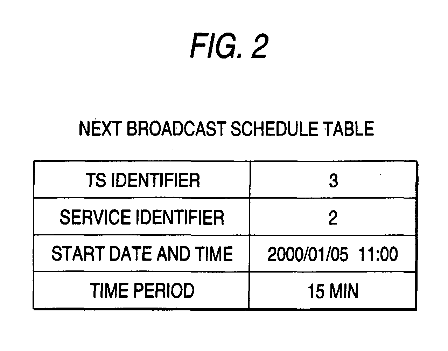

In FIG. 3, the TS identifier, the service identifier, and the program identifier of the next broadcast are described in the field of the next broadcast schedule of the program with the TS identifier 1, the service identifier 10, the program identifier 21 and thus the next broadcast schedule table of the program with the TS identifier 1, the service identifier 10, the program identifier 21 is created. Consequently, the next broadcast schedule table as shown in FIG. 2 is created. For example, the program association data identifier 3 is added for storage in the program association data storage means 11. The program association data with the program association data identifier 21 is, for example, an XML document and does not communicate the next broadcast schedule.

The program association data storage means 11 manages the program association data according to a program association data management table (FIG. 7).

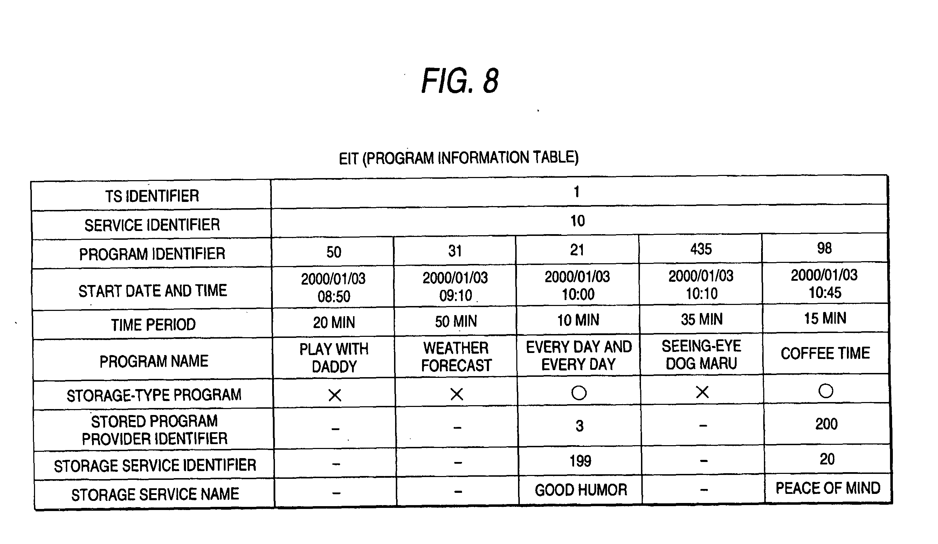

The program information creation means 15 creates SI (EIT, etc.,) and PSI (PMT, etc,) from the organization information managed by the program scheduler 13. For example, the EIT (program information table) for providing a program list for the viewer is created by extracting the TS identifier, the service identifier, the program identifiers, the start date and time and the time period of each program, the program name, the flag indicating whether or not the program is a storage-type program, and the identifier indicating the provider of the program, the identifier of storage service, and the storage service name if the program is a storage-type program from the organization information. For example, FIG. 8 shows an example of the EIT (program information table) created from the organization information in FIG. 3.

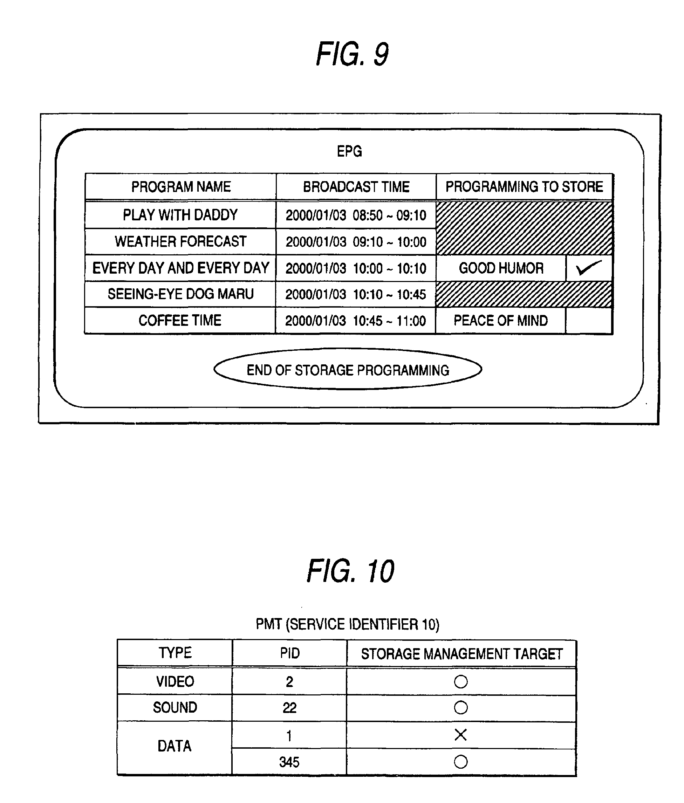

The PMT for communicating transmission line information that the reception means 32 receives is created by extracting the types of video, sound, program association data, etc., the PIDs, and the flags each indicating the video, sound, or program association data is a storage management target from the organization information. FIG. 10 shows an example of the PMT created from the organization information in FIG. 3.

The program information sending means 16 sends the program information. The program association data sending means 14 and the program sending means 18 send program association data and a program respectively as instructed from the program scheduler 13.

For example, when the organization information is as in FIG. 3, the program scheduler 13 instructs the program sending means 18 to send the video with the video identifier 34 and the sound with the sound identifier 789 to the channel with the service identifier 10 for 10 minutes starting at 10:00 on Jan. 3, 2000. It also instructs the program association data sending means 14 to send the program association data with the program association data identifier 3 and the program association data identifier 21.

The transmission means 19 transmits the program association data, the program information, and the program to the receiving apparatus 30.

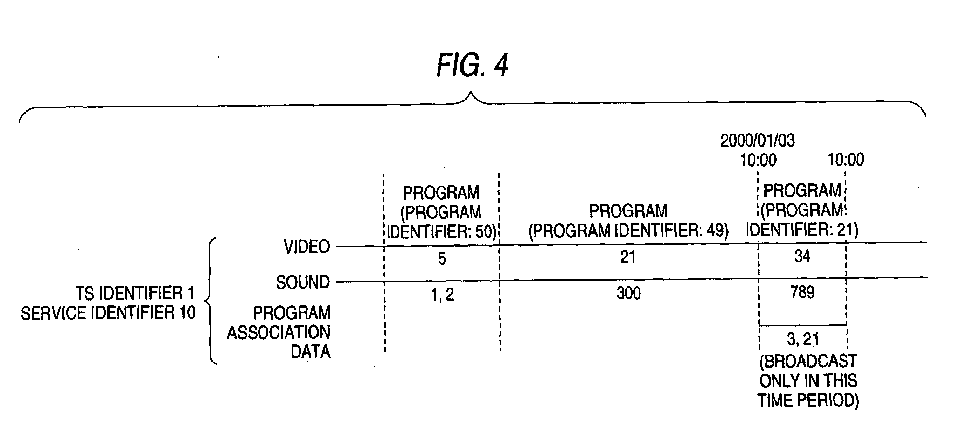

FIG. 4 shows the video, the sound, and the program association data sent from the channel with the TS identifier 1, the service identifier 10 in time sequence when the organization information in FIG. 3 is applied.

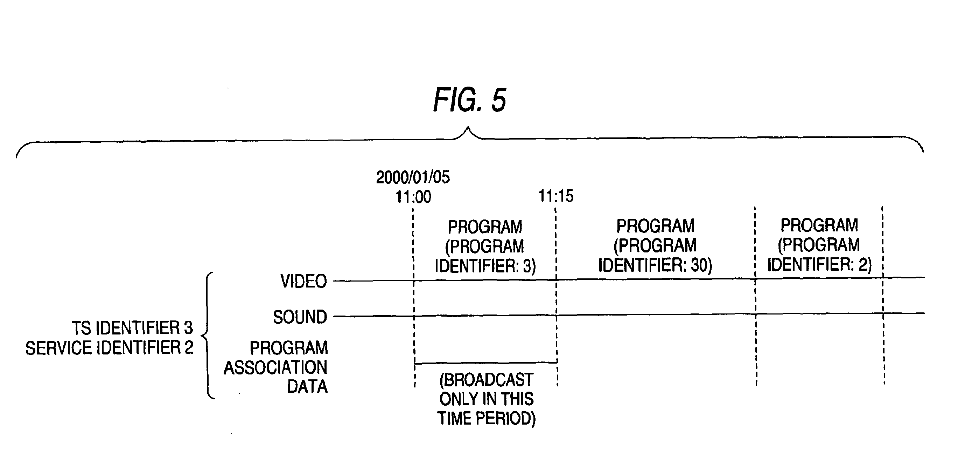

The program scheduler 13 also manages the organization information of the channel with the TS identifier 3, the service identifier 2 as in FIG. 5, and also gives instructions of sending the video and sound of program and the program association data as with the channel with the TS identifier 1, the service identifier 10.

On the other hand, in the receiving apparatus 30, the reception means 32 receives the program association data, the program information, and the program from the sending means 19. The program information storage means 34 stores the program information received by the reception means 32.

The EIT (program information table) is broadcasted prior to program broadcast. The EIT sent by the program information sending means 16 is transmitted by the transmission means 19 and is received by the reception means 32. The received EIT is stored in the program storage means 35, and is displayed by the program information display means 37. Display as in FIG. 9 is produced based on the EIT (program information table) as in FIG. 8. In FIG. 9, the program names and the broadcast times and the storage service names if the programs are storage-type programs are displayed. If the program is not a storage-type program, the column of programming to store is grayed out so that the viewer cannot program the apparatus to store the program.

Assume that the viewer programs the apparatus to store the program with a program name of "every day and every day" from the EPG through the display screen of the program information display means 38 (checks the storage service name "good humor"). The apparatus is programmed through the programming means 31 to store the program with the contents of the stored program provider identifier 3, the TS identifier 1, the service identifier 10, the program identifier 21, the start date and time 10:00 on Jan. 3, 2000, and the time period 10 minutes based on the contents described in the EIT (program information table) as in FIG. 8 stored in the program information storage means 34.

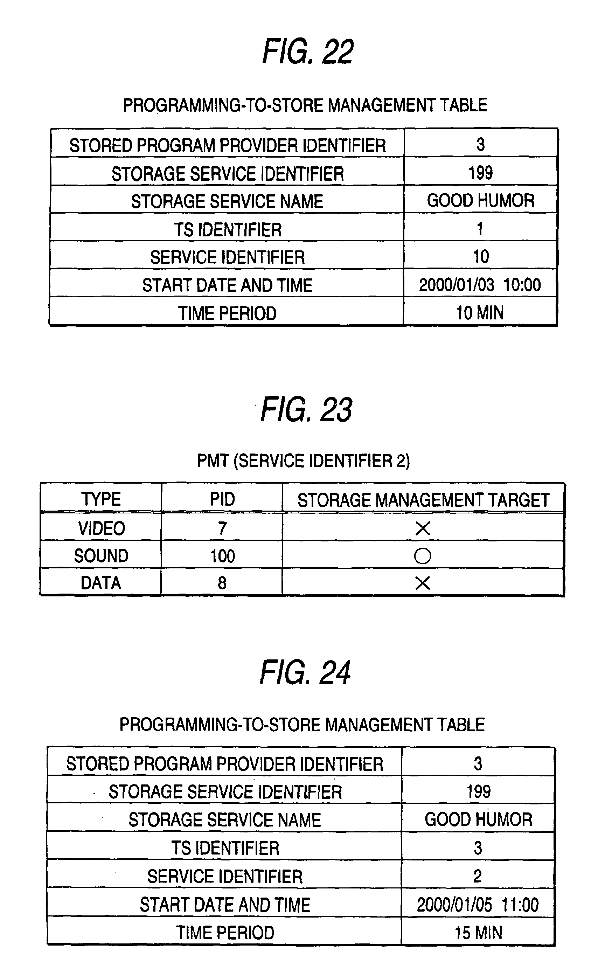

A programming-to-store table managed by the programming means 31 becomes as shown in FIG. 22.

When the time reaches 10:00 on Jan. 3, 2000, the programming means 31 instructs the reception means 32 to receive the TS identifier 1 and the service identifier 10. At this time, when the channel is selected to the TS identifier 1, the service identifier 10, the PMT as in FIG. 10 is broadcasted. Then, the PIDs with which the program and the program association data are broadcasted are obtained from the PMT. In FIG. 10, it is seen that the video is broadcasted with PID 2, that the sound is broadcasted with PID 22, and that the program association data is broadcasted with PID 1 and PID 345, so that the reception means 32 can obtain the video, the sound, and the program association data.

The received video and sound are stored in the program storage means 35 and the program association data is stored in the program association data storage means 33. In addition to the XML document with the program association data identifier 21, the next broadcast schedule table as in FIG. 2 is stored as the program association data.

Thus, it is seen that the next storage-type broadcast program will be broadcasted for 15 minutes starting at the start date and time 11:00 on Jan 5, 2000 with the TS identifier 3, the service identifier 2. If the program association data stored in the program association data storage means 33 contains the next broadcast schedule table, the programming means 31 programs the apparatus to store the program in accordance with the schedule.

At this time, the programming-to-store management table managed by the programming means 31 becomes as shown in FIG. 24. When the preselected time to store the program is reached, the programming means 31 instructs the reception means 32 to receive the program and the program association data.

Consequently, the program broadcasted for 15 minutes starting at the start date and time 11:00 on Jan 5, 2000 with the stored program provider identifier 3, the TS identifier 3, the service identifier 2 is stored in the program storage means 35. Since the program also contains the next broadcast schedule table as the program association data, the program association data is stored in the program association data storage means 33 and based on it, the programming means 31 programs the apparatus to store the next program based on the next broadcast schedule table. The described operation is repeated.

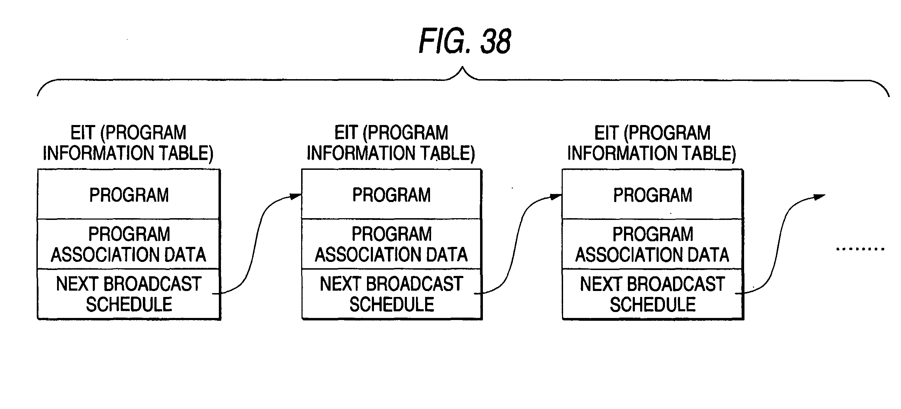

FIG. 38 is a drawing to show how programs are linked with each other by the next broadcast schedule tables in the embodiment. The apparatus is programmed to store at least one of the programs contained in the link, whereby it is made possible to automatically store all following programs liked by the next broadcast schedule tables.

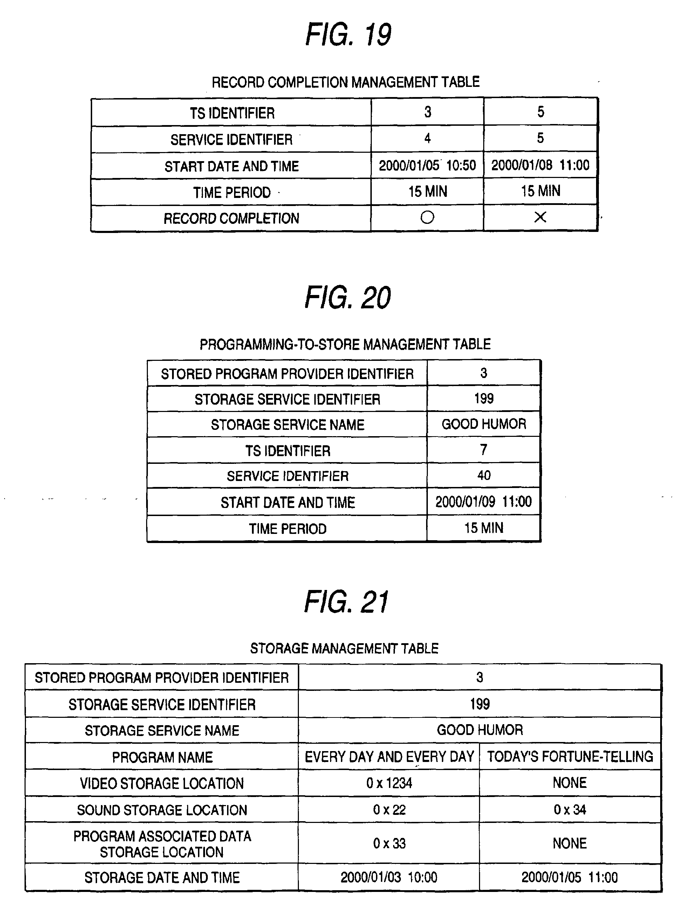

When video and sound and program association data are stored in the program storage means 35 and the program association data storage means 33 (however, the program association data with the next broadcast schedule table as the contents is not included in the storage management target), the storage management means 36 uses a storage management table (FIG. 21) to manage the program and the program association data for each stored program provider identifier and storage service identifier. At this time, the stored program provider identifier, the storage service identifier, the storage service name, and the storage date and time are obtained from a programming-to-store management table of the programming means 31.

For example, at the termination of storing "every day and every day" and stored program "today's fortune-telling" (TS identifier 3, service identifier 2, program identifier 3) based on the next broadcast schedule contained in the program association data as the viewer selected "every day and every day" out of the screen as in FIG. 9, the storage management means 36 manages the stored video, sound, and program association data in the storage management table as in FIG. 21. From the contents of the programming-to-store management table (FIG. 22), it is seen that the stored program provider identifier of the stored video, sound, and program association data is 3, that the storage service identifier is 199, and that the storage service name is "good humor."

The storage management means 36 manages the entries each with the storage management target flag set to in the PMT. In the PMT (FIG. 10) broadcasted at the same time as "every day and every day," the storage management target flags corresponding to PID 2, PID 22, and PID 345 are and thus the storage locations of the three as the storage management targets are registered in the storage management table (FIG. 21). The storage locations of the video and the sound represent the storage locations in the program storage means 35 and the storage location of the program association data represents the storage location in the program association data storage means 33. The PMT broadcasted at the same time as "today's fortune-telling" (created from the organization information in FIG. 3) becomes as shown in FIG. 23 and only the storage management target flag corresponding to the sound is and thus the storage locations other than the storage location of the sound for "today' s fortune-telling" are "None" in the storage management table in FIG. 21. The storage management target flag makes it possible to specify whether or not storage in the receiving apparatus 30 is to be executed in units of streams of video, sound, etc., and program association data, etc. It is also made possible to record and store only a part of a program.

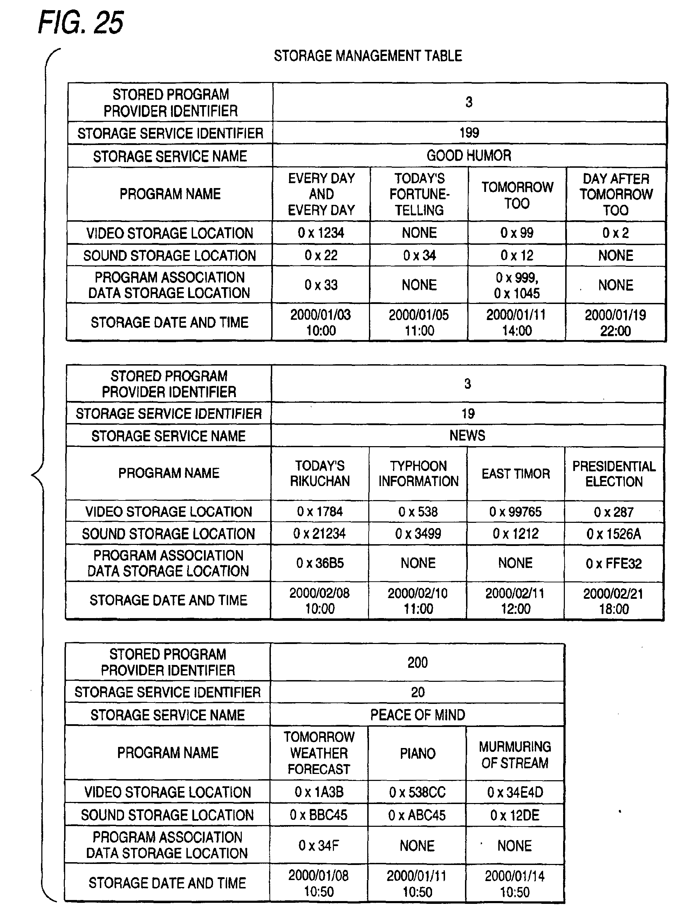

FIG. 25 shows an example of the storage management table managed by the storage management means 36 after such processing is repeated. It is seen that storage management is executed for storage services "good humor" (storage service identifier 199) and "news" (storage service identifier 19) provided by the stored program provider with the stored program provider identifier 3 and storage service "peace of mind" (storage service identifier 20) provided by the stored program provider with the stored program provider identifier 200.

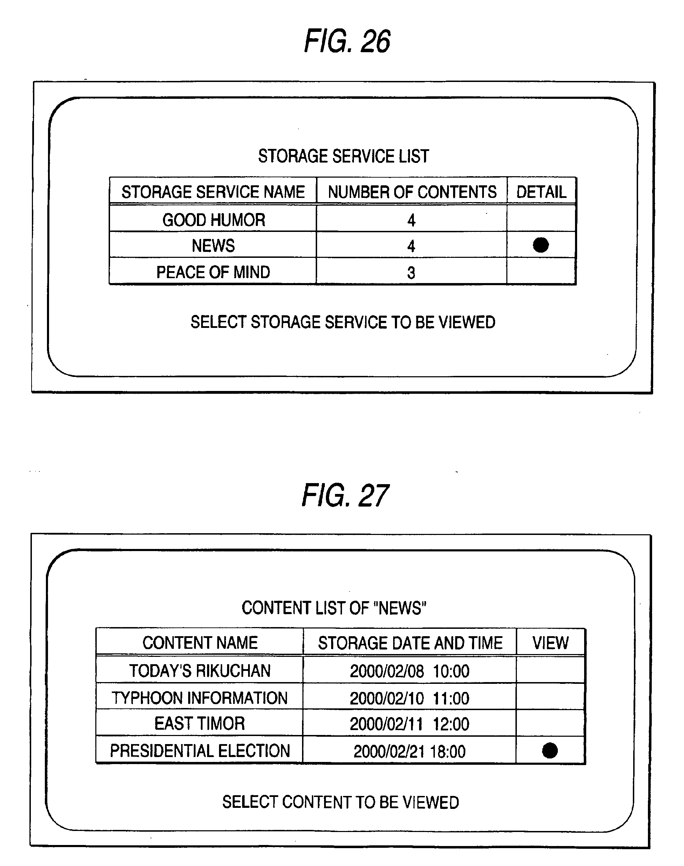

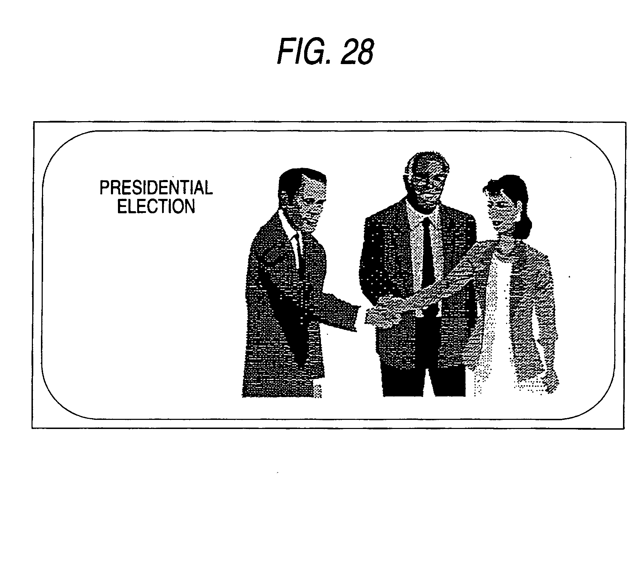

At such a time, if the viewer makes a request for displaying storage services for which storage management is executed, the stored program display means 37 displays a screen as shown in FIG. 26. The stored program display means 37 counts the number of stored programs for each storage service identifier (storage service name) in the storage management table (FIG. 25) and displays it as the number of contents. The viewer who wants to see in detail specifies the storage service name and gives a detailed display command. The stored program display means 37 changes the screen as shown in FIG. 27. The program names are displayed as content names and storage dates and times are also displayed at the same time. The viewer specifies the content (program) to be viewed. For example, when the viewer selects content "presidential election" on the screen in FIG. 27, the stored program display means 37 receives the video and the sound in the video storage location and the sound storage location of "presidential election" in the storage management table (FIG. 25) from the program storage means 35 for display. The stored program display means 37 also receives the program association data in the program association data storage location from the program association data storage means 33 and displays the program association data. As a result, news on presidential election is displayed as shown in FIG. 28.

As described above, the sending apparatus broadcasts the next broadcast schedule table as the program association data of a storage-type program and the receiving apparatus is programmed to store in accordance with the next broadcast schedule, whereby once storing of a storage-type program is started, it is made possible to continue storing the storage-type program without the need for the viewer to consider. It is also made possible to provide a plurality of storage-type programs or a part of a storage-type program as overall service.

In the embodiment, the next broadcast schedule has been described as a table, but implementation of containing the next broadcast schedule as a programming-to-store program in program association data is also possible. In this case, when a program and program association data are received, the programming-to-store program broadcasted as the program association data is started and requests the programming means to program the apparatus to store the next broadcast schedule.

In the description of the embodiment, the broadcasted program and program association data are additionally stored, but may be written over the previous program and program association data. The setting may be enabled to be made in the receiving apparatus or may be made in the transmitting apparatus so that the identity can be distinguished based on the program name, etc., for example. When the setting may be enabled to be made in the receiving apparatus, if "additional storage" is set in the receiving apparatus, program and program association data are additionally stored. If "overwrite" is set, when a program and program association data are recorded and stored, the program and program association data already recorded and stored with the same storage service identifier are deleted. To set in the transmitting apparatus so that the identity is distinguished based on the programidentifier, etc., for example, when a program and program association data are recorded and stored, the program and program association data already recorded and stored with the same storage service identifier and the same program identifier are deleted.

In the embodiment, the storage target flag has been described as implementation to describe in PMT, but it may be such implementation to describe in Present/Following EIT (program information table of the present and following programs).

### (Second embodiment)

In a second embodiment, a broadcast system wherein a plurality of next broadcast schedules of a program are set and the time to program an apparatus to record the next program can be selected from among the next broadcast schedules will be discussed.

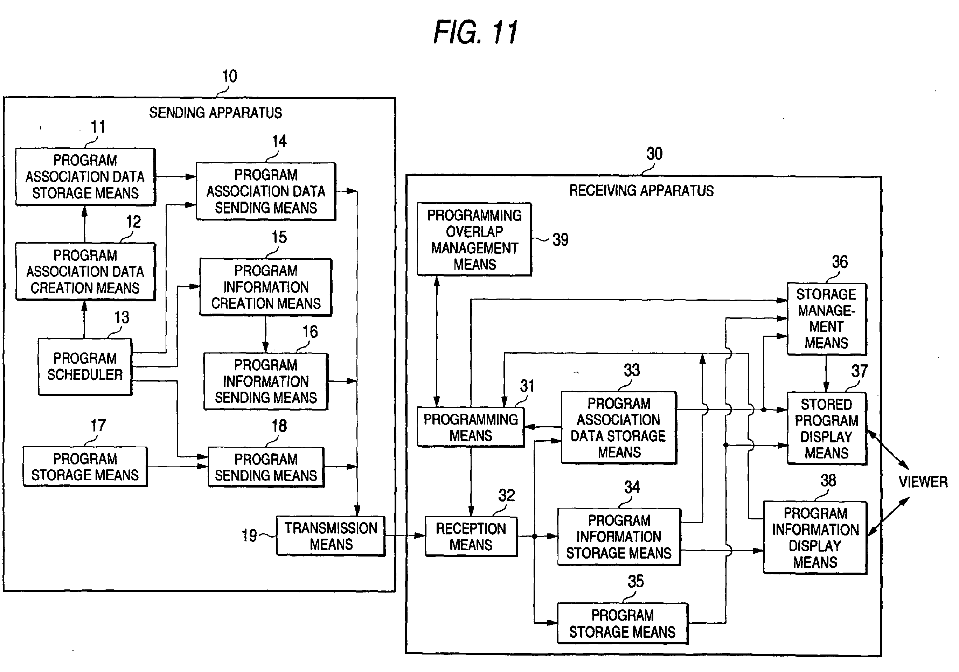

FIG. 11 shows a transmitting apparatus and a receiving apparatus. The transmitting apparatus 10 has the same configuration as that in the first embodiment (FIG. 1). The receiving apparatus 30 has the same configuration as that in the first embodiment except that it comprises programming overlap management means 39 for determining whether or not the time to program an apparatus to record overlaps an already selected time.

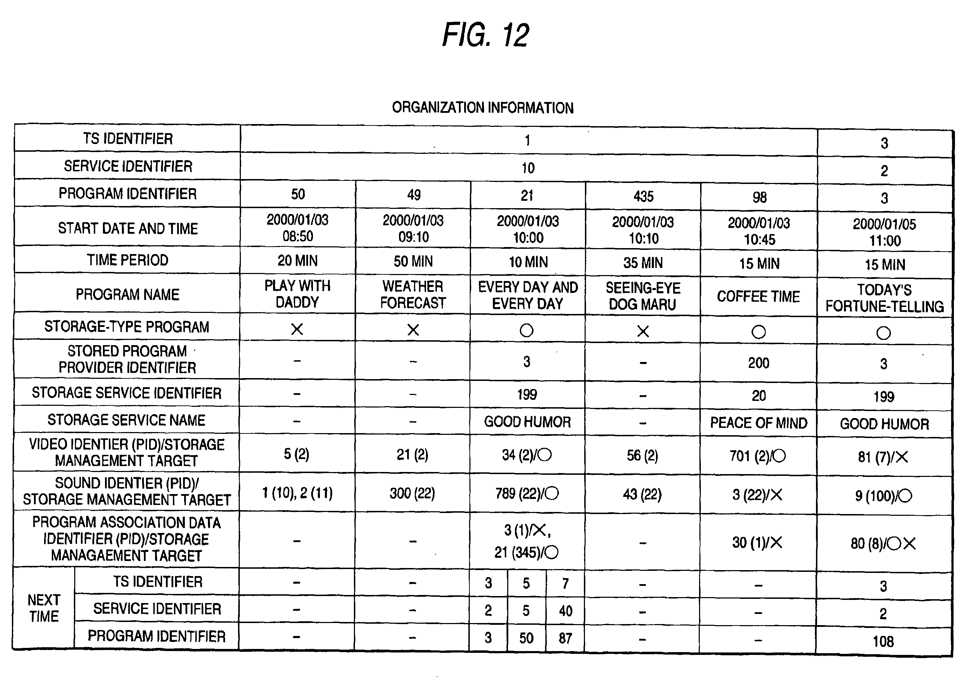

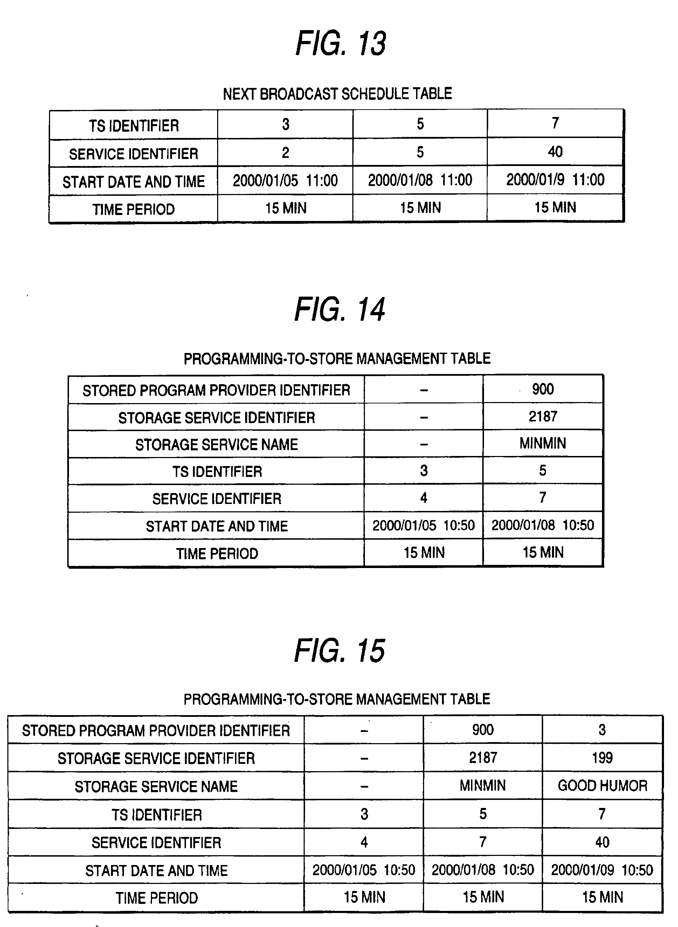

In the first embodiment, only one next broadcast schedule is described in the organization information, but a plurality of next broadcast schedules can also be described, for example, as shown in FIG. 12. Since the next broadcast schedule of the program with the TS identifier 1, service identifier 10, program identifier 21 appears three times, program association data creation means 21 creates a next broadcast schedule table as shown in FIG. 13.

A plurality of next broadcast schedules mean that the same program and program association data are broadcasted two or more times and if the program at what time is viewed, recorded, in the receiving apparatus 30, the result is the same. Conversely, if the program at any time is recorded, the program at any other time need not be recorded unless the record is not erased.

The operation of the sending apparatus 10 is the same as that of the sending apparatus of the first embodiment except that a plurality of schedules are described in the next broadcast schedule table.

The processing flow to recording the first program in the receiving apparatus 30 is similar to that in the first embodiment. Accordingly, the program is stored in program storage means 35 and the program association data containing the next broadcast schedule is stored in program association data storage means 33. Programming means 31 references the next broadcast schedule stored in the program association data storage means 33 and programs the apparatus to store.

On the other hand, the programming overlap management means 39 manages the current programming-to-store state based on a programming-to-store management table shown in FIG. 14.

Since the next broadcast schedule table stored in the program association data is as in FIG. 13, the programming means 31 first attempts to program the apparatus to store the program with TS identifier 3, service identifier 2 starting at 11 o'clock on Jan 5, 2000 for 15 minutes as the program broadcast time, closest to the broadcast time. At this time, the programming overlap management means 39 checks whether or not the time to program the apparatus to store the program overlaps any of the preselected times.

In this case, the time overlaps the program with TS identifier 3, service identifier 4 starting at 10:50 on Jan 5, 2000 for 15 minutes as the program broadcast time in FIG. 14. Then, the programming overlap management means 39 returns NG to the programming means 31. Upon reception of NG, the programming means 31 attempts to program the apparatus to store the program corresponding to the next broadcast schedule in the next broadcast schedule table in FIG. 13 (TS identifier 5, service identifier 5, program broadcast time 15 minutes starting at 11 o'clock on Jan 8, 2000). Again, the programming overlap management means 39 returns NG. Then, the programming means 31 attempts to program the apparatus to store the program corresponding to the next broadcast schedule in the next broadcast schedule table in FIG. 13 (TS identifier 7, service identifier 40, program broadcast time 15 minutes starting at 11 o'clock on Jan 9, 2000). This attempt results in success and the apparatus is programmed to store the program. The programming-to-store management table managed by the programming overlap management means 39 becomes as shown in FIG. 15.

After this, the program or program association data is stored according to the programming-to-store management table. Programming the apparatus to store and storing are repeated as in the first embodiment.

As described above, the sending apparatus broadcasts the next broadcast schedule table describing a plurality of next broadcast schedules as the program association data and if the receiving apparatus senses that the apparatus is programmed to store programs at overlap times, the apparatus is programmed to store the program on another schedule, whereby reliability of programming the apparatus to store each program or program association data is enhanced.
Programming overlap checked by the programming overlap management means 39 is not limited to programming to store programs or programming to store program association data pieces. Programming the apparatus to record and store program association data at the preselected time to program the apparatus to record a normal program consisting of video and sound is also checked.

In the description of the embodiment, if the apparatus is programmed to store programs at overlap times, the program at the preceding time takes precedence over the program at the following time, but any other priority condition can also be set in the programming overlap management means. As any other priority condition, the shorter broadcast time of the next broadcast program or program association data, the fewer number of next broadcast schedules, etc., is possible. The file size or the storage priority of the next broadcast program association data may be added to the next broadcast schedule table and the sending apparatus may transmit and the programming means may program the apparatus preferentially to store the program association data having a larger or smaller file size or higher priority.

### (Third embodiment)

In a third embodiment, a broadcast system wherein failure of programming an apparatus to record can be reduced will be discussed.

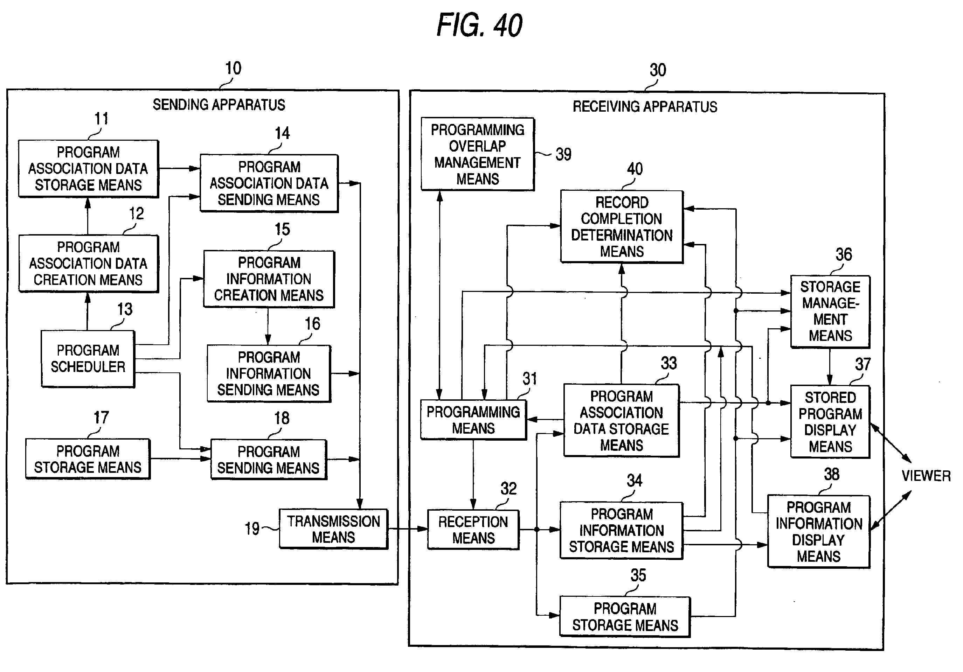

FIG. 40 shows a transmitting apparatus and a receiving apparatus. The transmitting apparatus 10 has the same configuration as that in the second embodiment (FIG. 11). The receiving apparatus 30 has the same configuration as that in the second embodiment except that it comprises record completion determination means 40 for checking whether or not recording results in success.

The operation of the sending apparatus 10 is the same as that of the sending apparatus of the second embodiment.

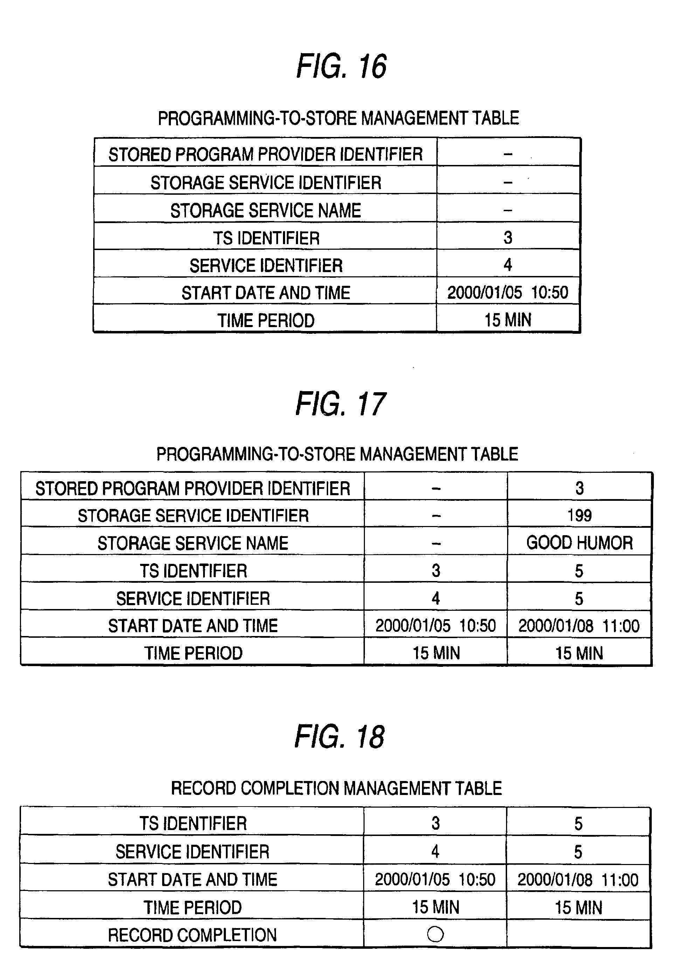

The processing flow to recording the first program in the receiving apparatus 30 is similar to that in the first embodiment. Accordingly, the program is stored in program storage means 35 and the program association data containing the next broadcast schedule is stored in program association data storage means 33. Programming means 31 references the next broadcast schedule stored in the program association data storage means 33 and programs the apparatus to store. Assume that the state of programming the apparatus to store, managed by programming overlap management means 39 before the apparatus is programmed to store is as shown in FIG. 16. Since the next broadcast schedule table stored in the program association data is as in FIG. 13, first an attempt is made to program the apparatus to store the program with TS identifier 3, service identifier 2 starting at 11 o'clock on Jan 5, 2000 for 15 minutes as the program broadcast time, closest to the broadcast time. The programming overlap management means 39 checks whether or not the time to program the apparatus to store the program overlaps anyof the preselected times. The time overlaps the program with TS identifier 3, service identifier 4 starting at 10:50 on Jan 5, 2000 for 15 minutes as the program broadcast time in FIG. 14. Then, the programming overlap management means 39 returns NG to the programming means 31. Upon reception of NG, the programming means 31 attempts to program the apparatus to store the program corresponding to the next broadcast schedule in the next broadcast schedule table in FIG. 13 (TS identifier 5, service identifier 5, program broadcast time 15 minutes starting at 11 o'clock on Jan 8, 2000). At this time, the time does not overlap any time and thus the programming overlap management means 39 returns OK and programming the apparatus to store the program results in success. Since the programming-to-store management table becomes as shown in FIG. 17, recording is executed based on the programming-to-store table.

The record completion determination means 40 uses a record completion management table (FIG. 18) to check whether or not recording results in success. The programming-to-store management table managed by the programming overlap management means 39 and PMT as shown in FIG. 10, stored inprogram information storage means 34 are collated with each other and if all data broadcasted with PID described in the PMT can be stored at the end time of the preselected time, the recording is assumed to be complete. If is entered in the record completion column of the record completion management table (FIG. 18), storing the corresponding program is normally complete. If the data cannot all be stored, X is written into the record completion column of the corresponding program (FIG. 19).

A case where a storage failure occurs because of forcible power off, etc., will be discussed. At the starting time, the receiving apparatus 30 first references the record completion management table and writes X into the record completion column of the program whose recording is not complete. For example, assume that the receiving apparatus was started at 15 o'clock on Jan 8, 2000 with the record completion management table as in FIG. 18. Seeing the record completion management table, it is seen that storing the program, program association data with TS identifier 5, service identifier 5 starting at 11 o'clock on Jan 8, 2000 for 15 minutes exceeding the preselected time is not complete, and thus X is written into the corresponding record completion column. If the program (program association data) whose storage results in failure is looked up in the next broadcast schedule table as in FIG. 13, stored in the program association data storage means 33, it is seen that the same program, program association data will be broadcasted at the time later than the current time, and thus the programming means 31 programs the apparatus to store the program, program association data. The programming-to-store management table becomes as shown in FIG. 20.

The subsequent processing is similar to the operation of the receiving apparatus in the first embodiment, the second embodiment.

Thus, whether or not recording each program, program association data is complete is checked and for the program, program association data whose recording is not normally complete, another broadcast time of the same program, program association data is looked up in the next broadcast schedule table and the apparatus is again programmed to record the program, program association data, whereby if a case where a record anomaly is caused by forcible power off or any other trouble occurs, the probability that circulation of programming the apparatus to record program, program association data and recording will be interrupted can be lowered.

### (Fourth embodiment)

In a fourth embodiment, a broadcast system will be discussed wherein when the content of program association data is separated from a program, program association data containing the next broadcast schedule of the program association data is transmitted together, whereby circular storage of the content of program association data is enabled.

The configurations of a transmitting apparatus and a receiving apparatus are the same as those of the first embodiment (FIG. 1).

Program storage means 17 and program association data storage means 11 of the transmitting apparatus 10 manage and store video and sound data of each program and program association data using a video and sound management table and a program association data management table like the program storage means and the program association data storage means 11 of the first embodiment.

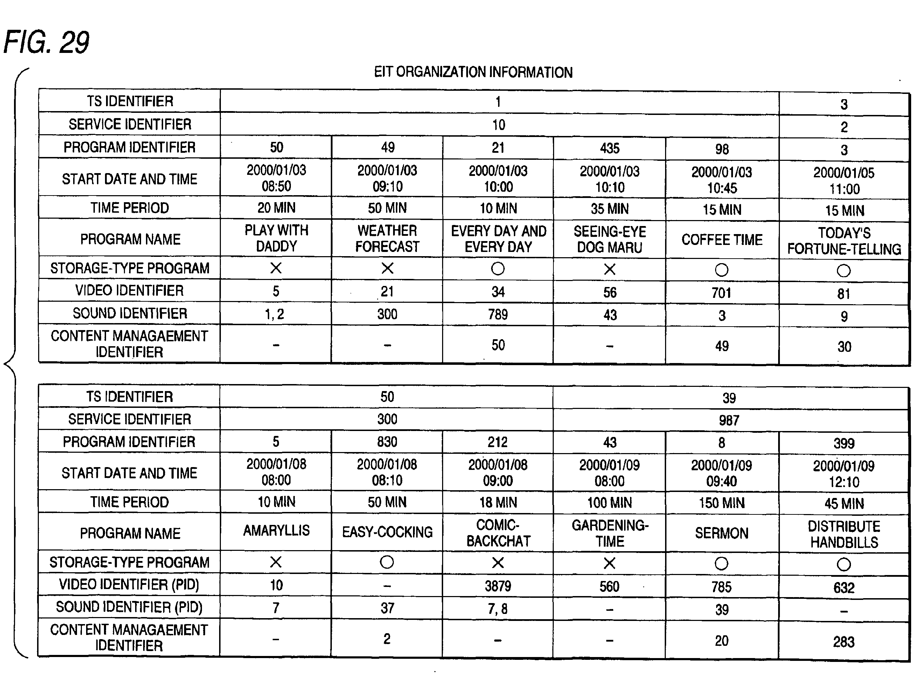

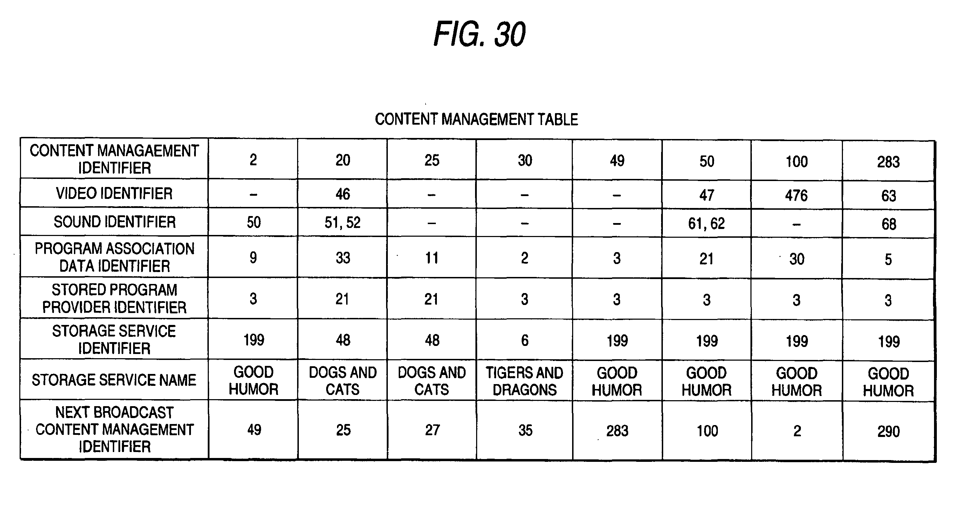

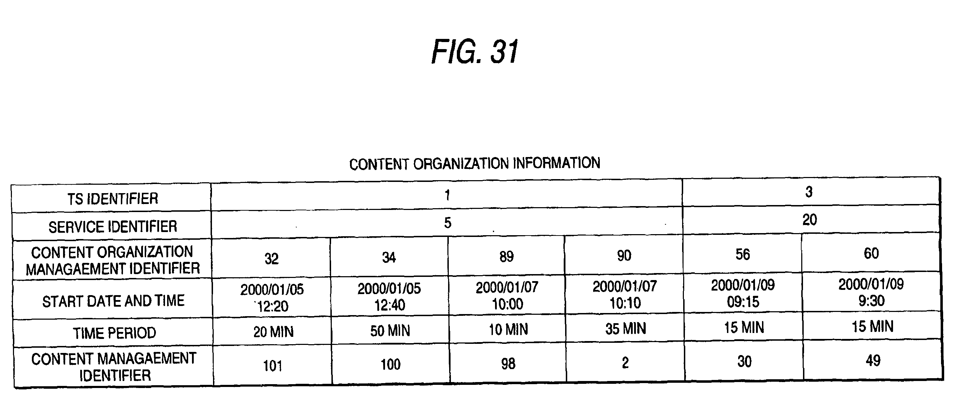

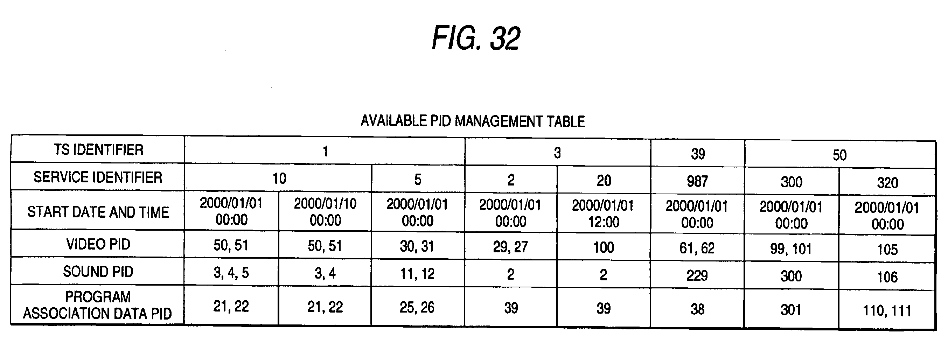

A program scheduler 13, unlike the program scheduler of the first embodiment, manages EIT organization information (FIG. 29), a content management table (FIG. 30), content organization information (FIG. 31), and an available PID management table (FIG. 32).

The EIT organization information (FIG. 29) describes TS identifiers, service identifiers, and the start date and time and the time period of each program, the program name, a flag indicating whether or not the program is a storage-type program, identifiers of video and sound broadcasted as the program, and content management identifier for each program identifier. The content management identifier is an identifier for identifying the whole of program association data to be broadcasted at the same time if program association data to be broadcasted in association with a program is broadcasted at the same time as the program.

The composition of the content indicated by the content management identifier is seen based on the content management table (FIG. 30). For example, according to the EIT organization information in FIG. 29, it is seen that the management identifier of the content broadcasted at the same time as the program with TS identifier 1, service identifier 10, program identifier 21 is 50. According to the content management table (FIG. 30), it is seen that the content with the content management identifier 50 is made up of video with the video identifier 47, sounds with the sound identifiers 61 and 62, and program association data with the program association data identifier 21. It is also seen that the content is provided by the stored program provider with the stored program provider identifier 3, that the storage service identifier is 199, and that the storage service name is "good humor." A next broadcast content management identifier represents the management identifier of the next content to be broadcasted in the same storage service. The identifier of the next broadcast content to the content with the content management identifier 50 is 100 and the identifier of the next broadcast content to the content with the content management identifier 100 is 2. Likewise, the content linked following the content with the content management identifier 2 can also be known based on the next broadcast content management identifier.

The content organization information (FIG. 31) defines the broadcast schedule of the content not listed in the EIT. According to the EIT, the viewer knows the fact that content, etc., is broadcasted from screen display as previously described in the first embodiment. After the viewer programs the apparatus to store on screen display as in FIG. 9, to broadcast content and store the content in the receiving apparatus without informing the viewer of the fact, it is also considered not to list in the EIT (for example, the case where the user programming the apparatus to store an introduction program of new cars is provided with information for persuading the user to buy a car in data broadcast is possible).

The broadcast schedule of content broadcasted in such a mode is managed according to the content organization information as in FIG. 31. The content organization information (FIG. 31) describes TS identifiers, service identifiers, and the start date and time and the time period of each program and the content management identifier of the content broadcasted in the time period for each content organization management identifier. The content organization management identifier has meaning similar to that of the program identifier in the EIT organization information and is an identifier for distinguishing the start date and time and the broadcast period indicated by the time period for each TS identifier and service identifier. The content management identifier is looked up in the content management table (FIG. 30), whereby the composition of video, sound, program association data, etc., and the stored program provider identifier, the storage service identifier, the storage service name, and the next broadcast content management identifier are seen.

The available PID management table (FIG. 32) manages PIDs that can be used for sending video, sound, and program association data for each TS identifier, service identifier. The available PID may be changed with the passage of time and thus it is also managed. According to the available PID management table in FIG. 32, it is seen that PIDs 50 and 51 for video, 3, 4, and 5 for sound, and 21 and 22 for program association data can be used from 00:00 on Jan 1, 2000 to 00:00 on Jan 10, 2000 in the service (channel) with TS identifier 1, service identifier 10. It is seen that after 00:00 on Jan 10, 2000, the PIDs 3 and 4 for sound (PID 5 is subtracted) can be used although the PIDs for video and program association data are not changed.

Program association data creation means 12 creates a next broadcast schedule table for each program involving content broadcasted at the same time (program involving a content management identifier) in the EIT organization information and for each separation managed according to content organization management identifier in the content organization information.

For example, creating a next broadcast schedule table of content (content management identifier 50) broadcasted as program association data of the program "every day and every day" indicatedby TS identifier 1, service identifier 10, program identifier 21 in the EIT organization information (FIG. 29) will be discussed.

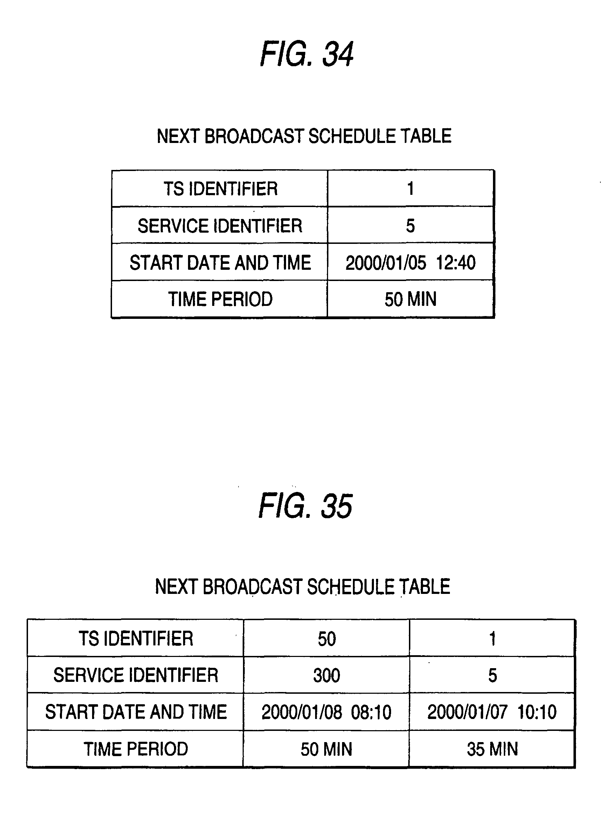

From the EIT organization information (FIG. 29), the content management identifier of the program "every day and every day" indicated by TS identifier 1, service identifier 10, program identifier 21 is 50. According to the content management table in FIG. 30, the next broadcast content management identifier corresponding to the content management identifier 50 is 100. The EIT organization information (FIG. 29) and the content organization information (FIG. 31) are searched for the program or the content organization broadcasting the content with the content management identifier 100. In this example, TS identifier 1, service identifier 5, content organization management identifier 34 is found from the content organization information (FIG. 31). The start date and time and the time period of the content organization are also known and thus a next broadcast schedule table is created based thereon. As a result, a next broadcast schedule table as shown in FIG. 34 is created.

To create a next broadcast schedule table of the program association data corresponding to TS identifier 1, service identifier 5, content organization management identifier 34 in the content organization information, it is seen from the content management table (FIG. 30) that the next broadcast content management identifier to the content management identifier 100 is 2, and thus a search is made for the program or the content organization broadcasting the content with the content management identifier 2 at the same time and a next broadcast schedule table is created based thereon. As a result, a next broadcast schedule table as shown in FIG. 35 is created.

Since the content with the content management identifier 2 is broadcasted once as the program managed according to the EIT organization information and once as the content organization managed according to the content organization information, namely, twice in total, two schedules are also described.

The program association data containing the next broadcast schedule table thus created is broadcasted together with program association data having content management identifier as described later.

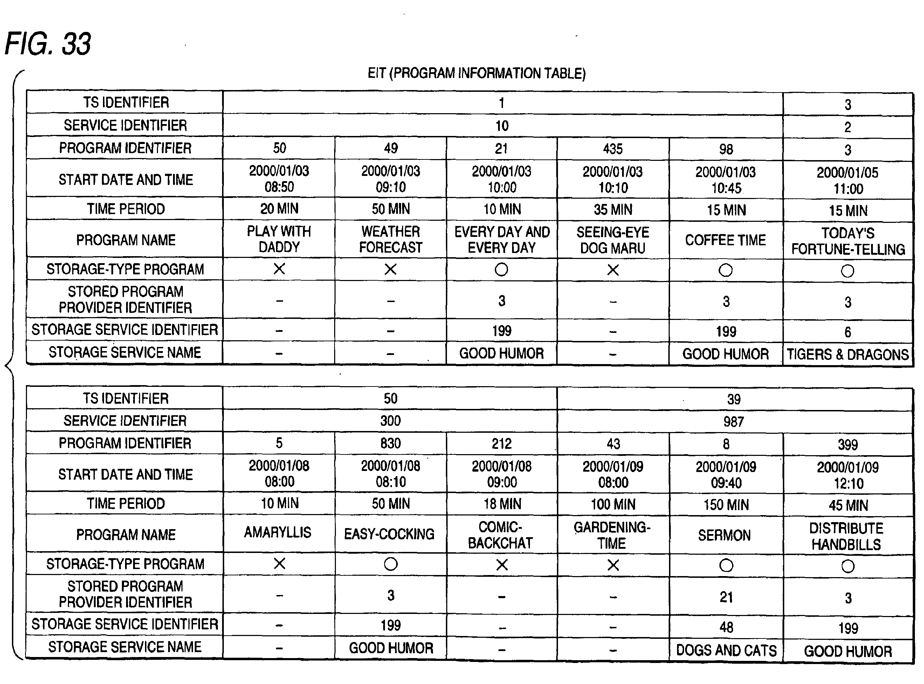

Program information creation means 15 creates EIT (program information table), etc., from the EIT organization information (FIG. 29) and the content management table (FIG. 30). The EIT (program information table) is created by extracting the TS identifier, the service identifier, the program identifiers, the start date and time and the time period of each program, the program name, and the flag indicating whether or not the program is a storage-type program from the EIT organization information (FIG. 29) and extracting the stored program provider identifier, the storage service identifier, and the storage service name corresponding to the content management identifier of EIT from the content management table (FIG. 30). The EIT (program information table) created from the EIT organization information in FIG. 29 and the content management table in FIG. 30 becomes as shown in FIG. 33.

As for PMT, first the program scheduler 13 creates a PID assignment management table and the program information creation means 15 creates PMT based on the PID assignment management table. The program scheduler 13 creates a PID assignment management table for the services (channels) described in the EIT organization information from the EIT organization information, the content management table, and the available PID management table and creates a PID assignment management table for the services described in the content organization information from the content organization information, the content management table, and the available PID management table.

The procedure of creating the PMT of the programs described in the EIT organization information will be discussed. For example, it is seen from the EIT organization information (FIG. 29) that the program "every day and every day" with TS identifier 1, service identifier 10, program identifier 21 is made up of the video with video identifier 34, the sound with sound identifier 789, and the content with content identifier 50. According to the content management table (FIG. 30), it is seen that the content with content identifier 50 is made up of the video with video identifier 47, the sounds with sound identifier 61 and 62, and the program association data with program association data identifier 21. Thus, it is seen that the program and the content are combined into the two videos having the identifiers 34 and 47, the three sounds having identifiers 789, 61, and 62, and the program association data with the program association data identifier 21 and the program association data as the next broadcast schedule table. At this stage, the next broadcast schedule table is already created by the program association data creation means 12 and is stored in the program association data storage means 11 assigned a program association data identifier. In this example, assume that the program association data identifier 500 is assigned.

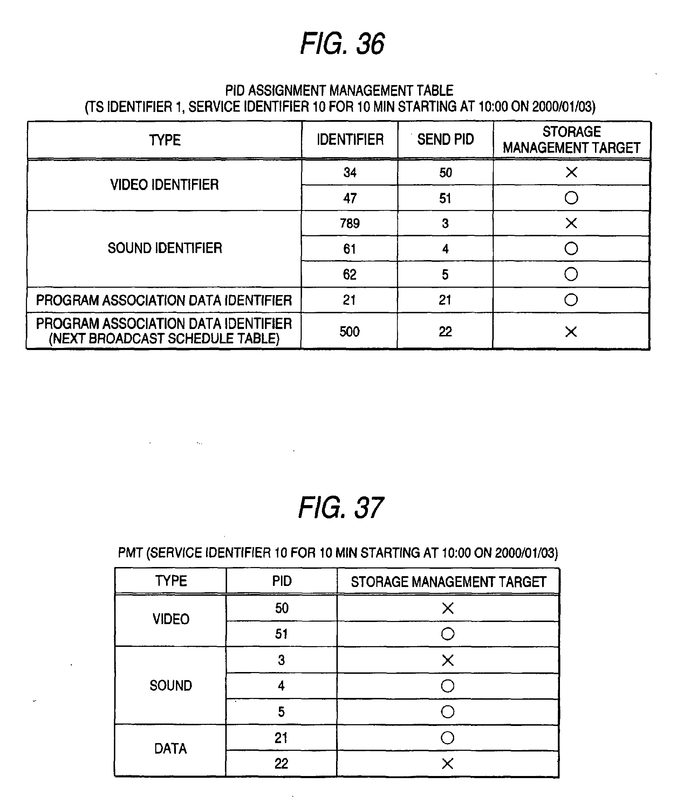

The program scheduler 13 searches the available PID management table (FIG. 32) for PIDs that can be used with the program "every day and every day" with TS identifier 1, service identifier 10, program identifier 21. The broadcast time of the program "every day and every day" is 10 minutes starting at 10:00 on Jan 3, 2000 and the PIDs that can be used in the time period are 50 and 51 for video, 3, 4, and 5 for sound, and 21 and 22 for program association data from the available PID management table (FIG. 32). Therefore, the PIDs are assigned to the video, the sound, and the program association data. As a result, a PID assignment management table as shown in FIG. 36 is created. Each entry with entered in the column of storage management target is a component of the content with the content identifier 50. Therefore, only the components of each content described in the content management table (FIG. 30) managed by the program scheduler 13 are stored in the receiving apparatus.

The program information creation means 15 receives the PID assignment management table from the program scheduler and creates PMT. If the column of identifier is deleted from the PID assignment management table, PMT can be created (FIG. 37).

The program scheduler 13 instructs program association data sending means 14 and program sending means 18 to send program association data and a program respectively in accordance with the created PID assignment management table. For example, if the PID assignment management table is as shown in FIG. 36, the program scheduler 13 instructs the program sending means 18 to send the video with video identifier 34 as PID 50, the video with video identifier 47 as PID 51, the voice with voice identifier 789 as PID 3, the voice with voice identifier 61 as PID 4, and the voice with voice identifier 62 as PID 5. It also instructs the program association data sending means 14 to send the program association data with program association data identifier 21 as PID 21 and the program association data with program association data identifier 500 (in the example, next broadcast schedule table) as PID 22.

The program association data sending means 14 and the program sending means 18 send the program association data and the program respectively in accordance with the instruction from the program scheduler 13. Program information sending means 16 sends SI (EIT, etc.,) and PSI (PMT, etc.,) created by the program information creation means 15. Transmission means 19 transmits the program association data, the program information, and the program to the receiving apparatus.

The operation of the receiving apparatus is similar to that in the first embodiment. However, as shown in the example, if a plurality of next broadcast schedules are described in the next broadcast schedule table, the operation of the receiving apparatus becomes as in the second embodiment or the third embodiment.

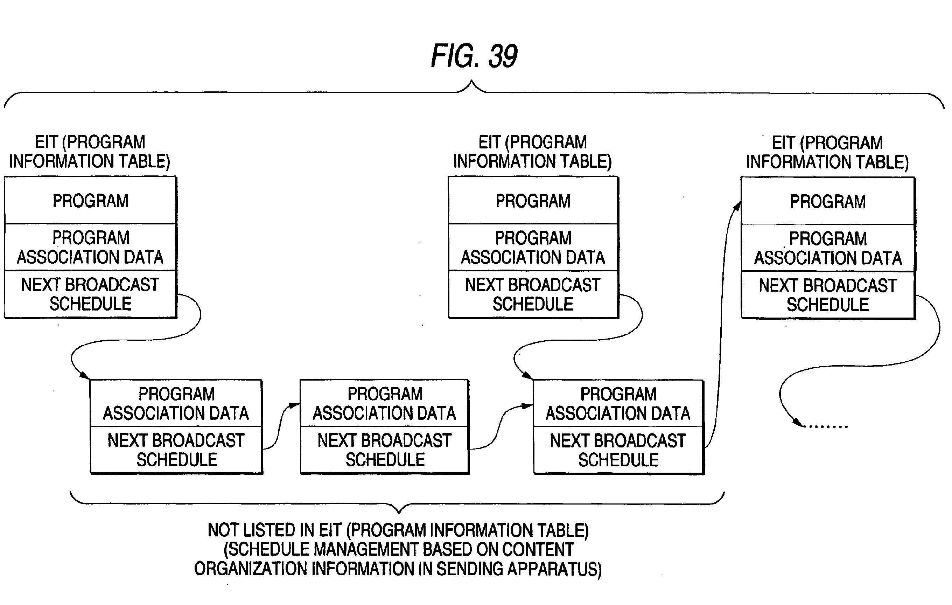

As described above, the content organization not listed in the EIT is managed, whereby it is made possible to broadcast program association data (content) on a schedule not listed in the EIT. Accordingly, it is made possible to store the content while the viewer is not aware of it. The link state with the next broadcast schedule tables becomes, for example, as shown in FIG. 39, and a program described in the EIT and a content organization not described in the EIT can be linked as desired. To display EPG on the receiving apparatus and cause the viewer to program the apparatus to use storage service on the screen, it is also made possible to link from a program described in the EIT and it is made possible to organize the broadcast schedule of storage service more flexibly.

### <Industrial Applicability>

As obvious from the description made above, in the transmitting apparatus and the receiving apparatus of the invention, once the apparatus is programmed to record and store one program, the apparatus can be programmed automatically to record and store in accordance with the next broadcast schedule.

The apparatus is programmed to record and store the program based on the next broadcast schedule and thus if the broadcast program is not fixed, the program can be recorded and stored precisely. The apparatus can also be programmed to record and store only a part of a program.

To program the apparatus to record and store a plurality of programs, adjustment can be made so as to prevent programming overlap.

If record and storage are not normally complete, the apparatus can be programmed again to record and store the program and record and storage can be executed reliably.

## Claims

1. A sending apparatus comprising:
program association data storage means for storing program association data to be broadcasted in association with a program;
a program scheduler for managing a sending schedule of the program and the program association data;
program sending means for sending the programas instructed by said program scheduler; and
program association data sending means for sending the program association data as instructed by said program scheduler,
wherein the program association data contains a next broadcast schedule of the program for broadcasting data in association or program association data.

2. The sending apparatus as claimed in claim 1 wherein said program sending means and said program association data sending means send the program and the program association data at the same time as instructed by said program scheduler and the program association data contains a next broadcast schedule of the program sent at the same time.

3. The sending apparatus as claimed in claim 1 wherein said program association data sending means sends program association data and program association data containing a next broadcast schedule of the program association data at the same time at a different timing from the program sending timing, as instructed by said program scheduler.

4. The sending apparatus as claimed in claim 1 further comprising program information creation means for creating program information containing the sending schedule managed by said program scheduler and program information sending means for sending the program information.

5. A receiving apparatus comprising:
program association data storage means for storing program association data containing a next broadcast schedule of a program or program association data, to be broadcasted in association with the program; and
programming means for programming said apparatus to record and store a program or program association data,
wherein said programming means programs said apparatus to record and store in accordance with the next broadcast schedule contained in the program association data.

6. The receiving apparatus as claimed in claim 5 wherein the program association data contains a next broadcast schedule of the program broadcasted at the same time and said programming means programs said apparatus to record and store program in accordance with the next broadcast schedule.

7. The receiving apparatus as claimed in claim 5 wherein the program association data contains a next broadcast schedule of the program association data to be broadcasted at the same time and said programming means programs said apparatus to record and store program association data in accordance with the next broadcast schedule.

8. The receiving apparatus as claimed in claim 5 further comprising program information storage means for storing program information containing a sending schedule of program and program association data, wherein the program association data is received in accordance with the sending schedule described in the program information and said programming means programs said apparatus to record and store the next program or program association data in accordance with the next broadcast schedule contained in the received program association data.

9. The receiving apparatus as claimed in claim 5 wherein said programming means programs said apparatus to record and store the next program or program association data in accordance with the next broadcast schedule contained in the program association data recorded and stored as said apparatus is programmed to record and store the program association data.

10. The receiving apparatus as claimed in claim 5 further comprising programming overlap management means for checking programming overlap, wherein said programming means selects a timer zone determined not to overlap by the programming overlap management means from among a plurality of next broadcast schedules contained in the program association data and programs said apparatus to record and store.

11. The receiving apparatus as claimed in claim 10 wherein when programming overlap occurs, said programming means selects programming changing a preselected time zone in accordance with a predetermined priority condition.

12. The receiving apparatus as claimed in claim 5 further comprising record completion determination means for determining completion of record and storage as said apparatus is programmed to record and store, wherein when the record completion determination means determines that record and storage result in failure, said programming means selects a timer zone not yet coming from among a plurality of next broadcast schedules contained in the program association data and programs said apparatus to record and store.
